# EUROPÄISCHE PATENTANMELDUNG

(11) **EP 1 257 108 A2**
(43) Veröffentlichungstag der Anmeldung: **13.11.2002**
(21) Anmeldenummer: 02010454.3
(22) Anmeldetag: 08.05.2002
(51) Int. Cl.: H04L 29/06

(54) **Verfahren zum Versenden oder Bereitstellen von Sprachinformationen**

(30) Priorität: 08.05.2001 DE 10122178; 29.06.2001 DE 10131674
(71) Anmelder: neusoft GmbH, D-82054 Sauerlach (DE)
(72) Erfinder: Bangemann, Jochen, 81827 München (DE)
(74) Vertreter: Schäuble, Paul

(57) **Zusammenfassung**

Die vorliegende Erfindung betrifft ein Verfahren zum Versenden von Sprachinformationen gekennzeichnet durch die Schritte Erfassung einer oder mehrerer Sprachinformationen eines Benutzers und/oder Erfassung der Auswahl einer oder mehrerer von dem Benutzer gewünschter Sprachinformationen und/oder Bereitstellung einer oder mehrerer Sprachinformationen ohne Auswahlmöglichkeit, Erfassung der Auswahl einer oder mehrerer von dem Benutzer gewünschter Musikund/oder Akustik- und/oder Bildinformationen und/oder Bereitstellung einer oder mehrerer Musik- und/oder Akustik- und/oder Bildinformationen ohne Auswahlmöglichkeit, Mischen der Sprachinformationen mit den Musik- und/oder Akustik- und/oder Bildinformationen und Versenden der kombinierten Sprach- und Musik- und/oder Akustik- und/oder Bildinformation an einen Empfänger oder Bereitstellen dieser Information zum Abruf durch einen Empfänger.

## Beschreibung

Die vorliegende Erfindung betrifft ein Verfahren zum Versenden oder Bereitstellen von Sprachinformationen.

Es sind Verfahren bekannt, bei denen ein Benutzer eine Sprachinformation per Telefonanruf übermitteln kann, die auf einem geeigneten Speichermedium abgelegt wird. Der Benutzer kann bestimmen, daß die hinterlegte Sprachinformation zu einem gewünschten Zeitpunkt an einen gewünschten Empfänger i. d. R. per Telefon verschickt wird. In Betracht kommen hier beispielsweise persönliche Mitteilungen, wie z. B. Glückwünsche, die zu einem bestimmten Termin den Empfänger erreichen sollen. Dabei finden sprach- oder tonwahlgesteuerte Dialoge Anwendung, bei denen der Benutzer mit Hilfe der Spracherkennung oder der Tonwahlsteuerung durch einen Dialog geführt wird, im Rahmen dessen er den gewünschten Text aufsprechen kann und weitere Informationen bezüglich Uhrzeit und Datum der Versendung bestimmen kann.

Nachteilig an dem vorbekannten Verfahren ist es, daß die Sprachinformation nicht verändert werden kann, so daß der Empfänger stets nur den nüchtern wirkenden, vom Absender gesprochenen Text erhält.

Es ist die Aufgabe der vorliegenden Erfindung ein Verfahren der eingangs genannten Art dahingehend weiterzubilden, daß der Eindruck des dem Empfänger zugesandten Textes verbessert wird.

Diese Aufgabe wird erfindungsgemäß dadurch gelöst, daß das Verfahren zum Versenden von Sprachinformationen die folgenden Schritte umfaßt:
Erfassung einer oder mehrerer Sprachinformationen eines Benutzers und/oder Erfassung der Auswahl einer oder mehrerer von dem Benutzer gewünschter Sprachinformationen und/oder Bereitstellung einer oder mehrerer Sprachinformationen ohne Auswahlmöglichkeit,
Erfassung der Auswahl einer oder mehrerer von dem Benutzer gewünschter Musik- und/oder Akustik- und/oder Bildinformationen und/oder Bereitstellung einer oder mehrerer Musik- und/oder Akustik- und/oder Bildinformationen ohne Auswahlmöglichkeit,
Mischen der Sprachinformationen mit den Musik- und/oder Akustik- und/oder Bildinformationen und
Versenden der kombinierten Sprach- und Musik- und/oder Akustik- und/oder Bildinformation an einen Empfänger oder Bereitstellung der kombinierten Sprach- und Musik- und/oder Akustik- und/oder Bildinformation zum Abruf durch einen Empfänger.

Das erfindungsgemäße Verfahren basiert darauf, daß die aufgenommene Sprachinformation bzw. der bereitgestellte oder vom Benutzer ausgewählte Text mit einer Musik- und/oder Akustikinformation und/oder einer Bildinformation, beispielsweise Meeresrauschen oder einen bekannten Musiktitel oder auch einem bekannten Filmausschnitt vermischt wird. Die auf diese Weise hinterlegte und modifizierte Sprachinformation wird nach dem Mischvorgang an den Empfänger versandt oder ihm zum Abruf bereitgestellt, was gegenüber dem vorbekannten Verfahren den Vorteil mit sich bringt, daß je nach Anlaß der Sprachinformation deren akustischer bzw. optischer Eindruck erheblich veränderbar ist. Beispielsweise können Glückwunsch- oder Beileidsnachrichten durch entsprechend ausgewählte Musiktitel untermauert werden. Ferner kann z. B. zu einer Bildinformation, beispielsweise zu der Darstellung eines technischen Gerätes, ein dieses erläuternder Text aufgesprochen werden und die gemischte Information an einen Empfänger versandt bzw. bereitgestellt werden.

Das erfindungsgemäße Verfahren läuft automatisch ab, d. h. nach der Erfassung bzw. Auswahl bzw. Bereitstellung der Sprach- und Musik- bzw. Akustik- und/oder Bildinformationen erfolgt ein automatisierter Mischvorgang sowie ein automatisiertes Versenden der Information zu dem gewünschten Zeitpunkt bzw. ein Bereitstellen der Information für den Empfänger.

Als weiterer Schritt kann die Benachrichtigung des Empfängers von der Bereitstellung vorgesehen sein. Der Empfänger kann mittels eines Onlinemediums, insbesondere per SMS, eMail oder Internet von der Bereitstellung informiert werden. Er kann die Information dann per Download im Internet, per Telefon, PDA, etc. abrufen.

Der Erfassung der Auswahl der Sprach-, Musik- und/oder Akustik- und/oder Bildinformationen kann das Anbieten vorgegebener Sprach-, Musik- und/oder Akustik- und/oder Bildinformationen vorausgehen. Denkbar ist somit, daß der Benutzer vorgegebene Sprachinformationen, Musiktitel oder Akustik- bzw. Bildinformationen auswählt. Ebenso ist es möglich, daß der Benutzer von sich aus beispielsweise einen Musiktitel oder Filmausschnitt angibt, der mit der Sprachinformation gemischt werden soll.

Ebenso ist denkbar, daß nicht die Auswahl eines Benutzers erfaßt wird, sondern daß vor oder nach der Erfassung der Sprachinformation eines Benutzers und/oder der Bereitstellung und/oder der Erfassung der Auswahl einer oder mehrerer von dem Benutzer gewünschter Sprachinformationen die Bereitstellung einer oder mehrerer Musik- und/oder Akustik- und/oder Bildinformationen ohne Auswahlmöglichkeit erfolgt. In diesem Fall ruft der Benutzer beispielsweise bei dem Provider des erfindungsgemäßen Verfahrens an, kann eine Sprachinformation aufsprechen, die, ohne daß der Benutzer eine Auswahlmöglichkeit hat, mit einer bestimmten Musik-, Akustik- oder Bildinformation gemischt wird und anschließend an einen Empfänger versandt bzw. bereitgestellt wird.

Unter "Bereitstellung" ist zu verstehen, daß eine bestimmte Sprach-, Akustik-, Musik- und/oder Bildinformation vorliegt, die - ohne daß der Benutzer wählen kann - stets dem Misch- und Versendevorgang zugrundegelegt wird. Bevorzugt ist jedoch eine Ausführungsform, bei der zumindest die Sprachinformation nicht bereitgestellt, sondern vom Benutzer erzeugt wird, was der versendeten Information eine persönliche Note verleiht.

In weiterer Ausgestaltung der vorliegenden Erfindung ist vorgesehen, daß die Erfassung einer Sprachinformation und/oder das Anbieten vorgegebener Sprach-, Musik- und/oder Akustik- und/oder Bildinformationen und/oder die Erfassung der Auswahl des Benutzers per Telefon oder Internet per herkömmlichem Festnetztelefon, Bildtelefon, Handy - per Anruf oder SMS -, e-mail, Internet oder PDA bzw. mittels eines mit Mikrophon bzw. Lautsprecher ausgestatteten PCs erfolgt. Grundsätzlich sind beliebige hierfür geeignete Medien einsetzbar.

Das Anbieten vorgegebener Sprach-, Musik- und/oder Akustik- und/oder Bildinformtionen sowie die Erfassung der Auswahl eines Benutzers erfolgen beispielsweise mittels eines sprach- oder tonwahlgesteuerten Dialogs. Grundsätzlich sind beliebige Online- und Offlinemedien einsetzbar.

In weiterer Ausgestaltung der vorliegenden Erfindung ist vorgesehen, daß die Erfassung einer Sprachinformation die Aufnahme eines von einem Benutzer gesprochenen Textes darstellt. Alternativ oder zusätzlich ist denkbar, daß der Benutzer einen vorgegebenen Text auswählen kann oder daß ein Standardtext bereitgestellt wird, der auf einem geeigneten Speichermedium abgelegt ist und ihm zur Auswahl angeboten bzw. ohne Auswahlmöglichkeit dem Misch- und Versendevorgang zugrundegelegt wird.

Das erfindungsgemäße Verfahren kann ferner den Schritt der Erfassung von Uhrzeit und/oder Datum und/oder Häufigkeit der Benachrichtigung bzw. der Versendung der Sprach- und Musik- bzw. Akustik- und/oder Bildinformation an den Empfänger umfassen. Diese Daten werden ebenfalls in einem geeigneten Speichermedium abgelegt und zum Zwecke der Versendung der kombinierten Informationen abgerufen.

In weiterer Ausgestaltung der vorliegenden Erfindung ist vorgesehen, daß das Mischen der Sprach- und Musik- und/oder Akustik- und/oder Bildinformation in Echtzeit oder zeitversetzt abläuft. Bevorzugt ist der Mischvorgang in Echtzeit.

Gemäß einer bevorzugten Ausgestaltung der Erfindung wird die gemischte Sprach- und Musik- bzw. Akustik- und/oder Bildinformation in Form einer Datei oder per Telefon versendet oder bereitgestellt.

In weiterer Ausgestaltung der vorliegenden Erfindung ist vorgesehen, daß die Übermittlung, d. h. das Versenden und/oder Empfangen, der gemischten Sprach- und Musik- und/oder Akustik- und/oder Bildinformation mittels herkömmlichem Festnetztelefon, Bildtelefon, Handy, als Anruf oder SMS, e-mail, Internet oder PDA erfolgt. Beispielsweise kann die Übermittlung unter Zuhilfenahme eines PCs mit Mikrophon bzw. Lautsprecher erfolgen. Grundsätzlich sind zur Ausführung des Services, d. h. zum Versenden der Information bis zum Abruf der bereitgestellten Informationen, alle hierfür geeigneten Medien einsetzbar. Grundsätzlich kann die Information versandt oder auch bereitgestellt werden. Im letzten Fall wird der Empfänger beispielsweise via Anruf, SMS, e-mail oder Internet entsprechend unterrichtet. Er kann die gemischte Information als Datei downloaden oder per Telefon abhören. Beispielhaft sind in diesem Zusammenhang Karaoke-Wettbewerbe zu nennen.

In weiterer Ausgestaltung der vorliegenden Erfindung ist vorgesehen, daß beim Mischvorgang der Lautstärkepegel der Musik- und/oder Akustikinformation gesenkt wird, sobald eine Sprachinformation erkannt wird und erhöht wird, sobald das Ende der Sprachinformation erreicht ist. Auf diese Weise kann die Sprachinformation sanft in die Trägerdatei (Musik und/oder Akustik) eingebettet werden.

Besonders vorteilhaft ist es, wenn die Bildinformationen Skizzen, dreidimensionale Modelle, Filmausschnitte, Animationen oder sonstige digitale Bildinformationen umfassen. Beispielsweise ist denkbar, daß durch die Sprachinformation komplexe Skizzen oder auch dreidimensionale Modelle kommentiert werden bzw. Bedienungsanleitungen in Form einer Sprachinformation und gleichzeitigen Bilddarstellungen erstellt werden und an den Empfänger versandt werden.

Das erfindungsgemäße Verfahren kann als weiteren Schritt die Erfassung einer Zugangsberechtigung des Benutzers vorsehen. Dabei kann die Zugangsberechtigung eine PIN-Nummer umfassen. Diese kann dem Benutzer zusammen mit einer Kontaktinformation beispielsweise über Telefon, Internet oder z. B. auch im Rahmen von Werbeveranstaltungen oder auf Kreditkarten vermittelt werden. Jedes beliebige Trägermedium ist einsetzbar. Denkbar ist z. B., daß Hersteller von Markenartikeln an die Produkte angeheftet oder im Rahmen von Werbemaßnahmen Karten verteilen, auf denen die PIN-Nummer enthalten ist, die der Benutzer zur Ausführung des erfindungsgemäßen Verfahrens dem entsprechenden Provider per Internet, Telefon etc. mitteilen muß. Die Zugangsberechtigung kann auch nach Auswertung biometrischer Verfahren, insbesondere Sprachanalyse, Erfassung des Fingerabdrucks oder der Iris erfolgen.

In weiterer Ausgestaltung der vorliegenden Erfindung ist vorgesehen, daß die Erfassung der Sprachinformation des Benutzers per Telefon und die Erfassung der Auswahl der Musik- und/oder Akustik- und/oder Bildinformation per Internet erfolgt. Verschiedene Medien sind beliebig kombinierbar. Denkbar ist beispielsweise, daß ein Musiktitel bzw. Filmausschnitt, Datum und Uhrzeit der Versendung sowie die Zielrufnummer im Internet abgefragt werden bzw. in eine im Internet verfügbare Maske eingegeben werden. Diese Daten werden mit der PIN-Nummer an den Provider des Verfahrens übermittelt. Per Telefon erfolgen dann die Eingaben der PIN-Nummer sowie der Sprachinformation, die entweder vom Benutzer aufgesprochen wird oder ausgewählt wird. Ebenso ist es möglich beide Schritte, d. h. die Erfassung der Sprachinformation sowie die Erfassung der Auswahl via Internet ablaufen zu lassen.

Das Ergebnis des erfindungsgemäße Verfahrens ist eine harmonische und/oder informative musikalische bzw. akustische und/oder bildliche Untermalung einer Sprachinformation, die mittels eines geeigneten Mediums an einen Empfänger versandt wird, wobei der Gesamteindruck bzw. Informationsgehalt gegenüber bloßen Sprachinformationen erheblich erweitert bzw. verbessert wird.

Das erfindungsgemäße Verfahren kann die Erfassung einer Sprachinformation eines Benutzers und/oder die Erfassung der Auswahl einer oder mehrerer vom Benutzer gewünschter Sprachinformationen sowie die Erfassung der Auswahl eines Benutzers betreffend Musik- und/oder Akustik- und/oder Bildinformationen vor. Beide Schritte können auch in umgekehrter Reihenfolge ablaufen. Das heißt, es kann vorgesehen sein, daß die Erfassung einer oder mehrerer Musik- und/oder Akustik- und/oder Bildinformationen vor der Erfassung bzw. Auswahl von Sprachinformationen erfolgt.

Weitere Einzelheiten und Vorteile der Erfindung werden anhand von Ausführungsbeispielen erläutert:
Der Benutzer, der zu einem gewünschten Zeitpunkt eine Nachricht mit musikalischer und/oder akustischer Untermalung versenden möchte, wendet sich per Telefonanruf an den Provider des erfindungsgemäßen Verfahrens.

Der Dialog zwischen Provider und Benutzer erfolgt ausschließlich sprach- oder tonwahlgesteuert.

Zunächst wird der Benutzer aufgefordert, eine Sprachinformation zu hinterlegen. Der Benutzer spricht den gewünschten Text ein, der auf einem geeigneten Speichermedium abgelegt wird. Alternativ oder zusätzlich kann vorgesehen sein, daß der Benutzer mit Hilfe des sprach- oder tonwahlgesteuerten Dialoges einen vorgegebenen Text auswählen kann. Das Anbieten verschiedener Texte sowie das Erkennen der Auswahl des Benutzers erfolgt ebenfalls über den oben genannten sprach- oder tonwahlgesteuerten Dialog.

Im Anschluß daran wird der Benutzer aufgefordert, eine vorgegebene Musikund/oder Akustik- und/oder Bildinformationen auszuwählen oder einen gewünschten Musiktitel oder eine Akustikinformation oder eine Bildinformation, beispielsweise einen Filmausschnitt evtl. mit musikalischer Untermalung, zu nennen. Auch dieser Dialog erfolgt sprach- oder tonwahlgesteuert.

Der Benutzer gibt die gewünschte Musik- oder Akustik- und/oder Bildinformation ein und bestimmt darüber hinaus Datum, Uhrzeit und die Häufigkeit der Versendung der gemischten Sprach- und Musik- bzw. Akustik- bzw. Bildinformation sowie die Telefonnummer oder Internetadresse des Empfängers.

Im Anschluß daran wird der Dialog mit dem Benutzer automatisch beendet und es erfolgt der Mischvorgang der aufgenommenen oder ausgewählten Sprachinformation mit der ausgewählten Musik- bzw. Akustik- bzw. Bildinformation.

Alternativ zu dem oben genannten Vorgehen ist es ebenfalls möglich, daß zunächst die Akustik-, Musik- oder Bildinformation ausgewählt wird und anschließend die Sprachinformation aufgenommen oder ausgewählt wird.

Nach dem automatischen Mischvorgang wird die auf diese Weise erstellte gemischte Datei abgelegt. Zu dem von dem Benutzer vorgegebenen Zeitpunkt und in der gewünschten Häufigkeit wird die gemischte Datei nunmehr in Form eines Telefonanrufes oder via Internet oder PDA an den Empfänger versandt. Der Mischvorgang sieht vor, daß der Lautstärkepegel der Trägerdatei (Musik oder Akustik) automatisch und sanft auf einen vorgegebenen Pegel gesenkt wird, sobald ein Inhalt der Sprach- bzw. Textdatei erkannt wird. Ist das Ende der Sprach- bzw. Textinformation erreicht, wird die Versendung der Nachricht entweder beendet oder zunächst nochmals der Lautstärkepegel erhöht und anschließend der Versendevorgang beendet.

Im folgenden werden weitere Ausführungsbeispiele der vorliegenden Erfindung erläutert:

Das erfindungsgemäße Verfahren wird vollständig über das Telefon abgewickelt. Der Benutzer gibt sämtliche Informationen, d. h. die Sprachinformation, die ausgewählte Akustik-, Musik- und/oder Bildinformation, seine PIN-Nummer, Datum und Uhrzeit der Versendung, Telefonnummer des Empfängers per Telefon ein. Denkbar ist beispielsweise die Benutzung einer 0190-Nummer.

Gemäß einer anderen Ausführungsform werden als Medien das Telefon sowie das Internet verwendet werden. Die Informationen, die der Benutzer per Internet eingeben muß, sind Musiktitel, Akustikinformation oder Bildinformation, z. B. Filmausschnitt, Datum und Uhrzeit der Versendung sowie die Zielrufnummer. Diese Daten werden mit einer zuvor von dem Provider des erfindungsgemäßen Verfahrens generierten PIN-Nummer an den Provider überspielt. Per Telefon erfolgen dann die weiteren Eingaben, d. h. die PIN-Nummer, die zu übersendende Sprachinformation sowie auch die Versendung der gemischten Information an den Empfänger.

Die PIN-Nummer, die zum Zugang, d. h. zur Benutzung des Verfahrens berechtigt, kann mit Streuartikeln, Mailings, SMS, Kunden-, Sammel-, Glückwunsch- oder Eintrittskarten an eine Zielgruppe versandt bzw. verteilt werden. Auch die Nummern von Kunden-, Kredit-, Club-, Telefon- und Mitgliedskarten können vollständig oder teilweise als PIN-Nummern verwendet werden. Beispielhaft sind hier ferner Werbemaßnahmen von Automobilherstellern, Werbemaßnahmen bei der Einführung neuer Filme, Produkte oder Musiktitel denkbar. Der Benutzer erhält beispielsweise im Rahmen der Motiv- bzw. Firmenwerbung eine Karte, auf der z. B. hinter einem Rubbelfeld die PIN-Nummer angegeben ist, die ferner in der Datenbank des Providers des erfindungsgemäßen Verfahrens abgespeichert ist. Der Benutzer, der diese Karte erhält, kann nun die PIN-Nummer ermitteln und eine Telefonnummer wählen, unter der er den Provider des erfindungsgemäßen Verfahrens erreicht. Der Benutzer muß nun die persönliche PIN-Nummer sowie seine persönlichen Grüße aufsprechen. Im weiteren wird dem Benutzer eine Wahlmöglichkeit verschiedener Musik- und Akustik- und/oder Bildinformationen eröffnet. Die Auswahl des Benutzers wird erfaßt und wie oben beschrieben mit der Sprachinformation gemischt. Alternativ kann auch vorgesehen sein, daß diese Auswahlmöglichkeit dem Benutzer nicht offensteht. Insbesondere im Falle von Werbe- und Promotionmaßnahmen kann vorgesehen sein, daß die Bildinformation, beispielsweise ein Filmausschnitt eines neu einzuführenden Kinofilms, eine Musikinformation im Rahmen einer Promotiontour eines bekannten Interpreten oder auch bekannte Melodien zu bestimmten Produkten (Kaffee, Waschmittel, etc.) festliegen. In diesem Fall kann der Benutzer nach Eingabe bzw. Übermittlung seiner PIN-Nummer lediglich seine persönliche Grußnachricht aufsprechen. Diese Information wird dann mit der entsprechenden vorgegebenen Akustik-, Musik-, oder Bildinformation vermischt und zu dem gewünschten Zeitpunkt und in der gewünschten Häufigkeit an den ausgewählten Empfänger versandt.

Von Interesse ist die oben beschriebene Verfahrensweise der Verteilung einer Zugangsberechtigung insbesondere für den Versandhandel, Direktmarketingagenturen, Kinobetreiber, Konzertveranstalter, Ticketvermarkter, die Musikindustrie, Markenartikler, Mobilfunkbetreiber, Reiseveranstalter, Medienunternehmen, Internetportale, Einzelhändler und Geschenkartikler. Der Aufruf des erfindungsgemäßen Verfahrens kann beispielsweise in die Menüs der Mobilfunkanbieter integriert werden.

Eine geeignete Vorrichtung zur Durchführung des erfindungsgemäßen Verfahrens umfaßt Mittel zur Erfassung einer Sprachinformation eines Benutzers und/oder zur Bereitstellung von Sprachinformationen und/oder zur Erfassung der Auswahl einer oder mehrerer vom Benutzer gewünschter Sprachinformationen sowie Mittel zur Erfassung der Auswahl/Bereitstellung einer oder mehrerer Musik- und/oder Akustik- und/oder Bildinformationen.

Eine derartige Vorrichtung umfaßt ferner Speichermedien, in denen vorgegebene Sprach-, Musik- und/oder Akustik- und/oder Bildinformationen abgelegt sind. Ferner sind Mittel vorgesehen, die einen sprach- oder tonwahlgesteuerter Dialog ermöglichen.

Darüber hinaus umfaßt die Vorrichtung eine Mischeinheit, in der Sprach- und Musik- bzw. Akustik- bzw. Bildinformationen kombiniert werden und in Form einer Datei abgelegt werden. Schließlich sind Mittel vorhanden, mittels derer die kombinierte Datei in Form eines Telefonanrufes, per Internet oder PDA versandt werden können.

Zusätzlich können Mittel vorgesehen sein, mittels derer die in den Unteransprüchen genannten vorteilhaften Weiterbildungen der Erfindung realisierbar sind.

## Patentansprüche

1. Verfahren zum Versenden von Sprachinformationen,
**gekennzeichnet durch die Schritte:**
Erfassung einer oder mehrerer Sprachinformationen eines Benutzers und/oder Erfassung der Auswahl einer oder mehrerer von dem Benutzer gewünschter Sprachinformationen und/oder Bereitstellung einer oder mehrerer Sprachinformationen ohne Auswahlmöglichkeit,
Erfassung der Auswahl einer oder mehrerer von dem Benutzer gewünschter Musik- und/oder Akustik- und/oder Bildinformationen und/oder Bereitstellung einer oder mehrerer Musik- und/oder Akustik- und/oder Bildinformationen ohne Auswahlmöglichkeit,
Mischen der Sprachinformationen mit den Musik- und/oder Akustik- und/oder Bildinformationen und
Versenden der kombinierten Sprach- und Musik- und/oder Akustik- und/oder Bildinformationen an einen Empfänger oder Bereitstellung der kombinierten Sprach- und Musik- und/oder Akustik- und/oder Bildinformation zum Abruf **durch** einen Empfänger.

2. Verfahren nach Anspruch 1, **dadurch gekennzeichnet, daß** als weiterer Schritt die Benachrichtigung des Empfängers von der Bereitstellung vorgesehen ist.

3. Verfahren nach Anspruch 2, **dadurch gekennzeichnet, daß** die Benachrichtigung des Empfängers mittels eines Onlinemediums, insbesondere per SMS, e-mail oder Internet, erfolgt.

4. Verfahren nach einem der Ansprüche 1 bis 3, **dadurch gekennzeichnet, daß** der Erfassung der Auswahl der Sprach-, Musik- und/oder Akustik- und/oder Bildinformationen das Anbieten vorgegebener Sprach-, Musik- und/oder Akustik- und/oder Bildinformationen vorausgeht.

5. Verfahren nach einem der Ansprüche 1 bis 4, **dadurch gekennzeichnet, daß** die Erfassung einer Sprachinformation und/oder das Anbieten vorgegebener Sprach-, Musik- und/oder Akustik- und/oder Bildinformationen und/oder die Erfassung der Auswahl des Benutzers per herkömmlichem Festnetztelefon, Bildtelefon, Handy - per Anruf oder SMS -, e-mail, Internet oder PDA erfolgt.

6. Verfahren nach einem der Ansprüche 1 bis 5, **dadurch gekennzeichnet, daß** das Anbieten vorgegebener Sprach-, Musik- und/oder Akustik- und/oder Bildinformation und die Erfassung der Auswahl eines Benutzers mittels eines sprach- oder tonwahlgesteuerten Dialogs erfolgt.

7. Verfahren nach einem der Ansprüche 1 bis 6, **dadurch gekennzeichnet, daß** die Erfassung einer Sprachinformation die Aufnahme eines von einem Benutzer gesprochenen Textes darstellt.

8. Verfahren nach einem der Ansprüche 1 bis 7, **dadurch gekennzeichnet, daß** das Verfahren ferner den Schritt der Erfassung von Uhrzeit und/oder Datum und/oder Häufigkeit der Benachrichtigung bzw. der Versendung der Sprach- und Musik- und/oder Akustik- und/oder Bildinformation an den Empfänger umfaßt.

9. Verfahren nach einem der Ansprüche 1 bis 8, **dadurch gekennzeichnet, daß** das Mischen der Sprach- und Musik- und/oder Akustik- und/oder Bildinformationen in Echtzeit oder zeitversetzt abläuft.

10. Verfahren nach einem der Ansprüche 1 bis 9, **dadurch gekennzeichnet, daß** die gemischte Sprach- und Musik- und/oder Akustik- und/oder Bildinformation in Form einer Datei oder per Telefon versendet oder bereitgestellt wird.

11. Verfahren nach einem der Ansprüche 1 bis 10, **dadurch gekennzeichnet, daß** die Übermittlung der gemischten Sprach- und Musik- und/oder Akustik- und/oder Bildinformation mittels herkömmlichem Festnetztelefon, Bildtelefon, Handy, als Anruf oder SMS, e-mail, Internet oder PDA erfolgt.

12. Verfahren nach einem der Ansprüche 1 bis 11, **dadurch gekennzeichnet, daß** beim Mischvorgang der Lautstärkepegel der Musik- und/oder Akustikinformation gesenkt wird, sobald eine Sprachinformation erkannt wird, und erhöht wird, sobald das Ende der Sprachinformation erreicht ist.

13. Verfahren nach einem der Ansprüche 1 bis 12, **dadurch gekennzeichnet, daß** die Bildinformationen Skizzen, dreidimensionale Modelle, Filmausschnitte, Animationen oder sonstige digitale Bildinformationen umfassen.

14. Verfahren nach einem der Ansprüche 1 bis 13, **dadurch gekennzeichnet, daß** als weiterer Schritt die Erfassung einer Zugangsberechtigung des Benutzers vorgesehen ist.

15. Verfahren nach Anspruch 14, **dadurch gekennzeichnet, daß** die Zugangsberechtigung eine PIN-Nummer umfaßt.

16. Verfahren nach Anspruch 14, **dadurch gekennzeichnet, daß** die Zugangsberechtigung nach Auswertung biometrischer Verfahren, insbesondere Sprachanalyse, Erfassung des Fingerabdrucks oder der Iris, erfolgt.

17. Verfahren nach einem der Ansprüche 1 bis 16, **dadurch gekennzeichnet, daß** die Erfassung der Sprachinformation des Benutzers per Telefon und die Erfassung der Auswahl der Musik- und/oder Akustik- und/oder Bildinformation per Internet erfolgt.

18. Verfahren nach einem der Ansprüche 1 bis 16, **dadurch gekennzeichnet, daß** sowohl die Erfassung der Sprachinformation des Benutzers als auch die Erfassung der Auswahl der Musik- und/oder Akustik- und/oder Bildinformation per Internet erfolgen.
